# EUROPEAN PATENT APPLICATION

(11) **EP 2 165 690 A2**
(43) Date of publication of application: **24.03.2010**
(21) Application number: 09170944.4
(22) Date of filing: 22.09.2009
(51) Int. Cl.: A61G 3/06, B60P 1/44

(54) **Lift for passenger vehicles**

(30) Priority: 22.09.2008 SE 0802015
(71) Applicant: Prototyp Center-KV AB, 370 11 Backaryd (SE)
(72) Inventor: Urbanusson, Ingvar, 370 11, Backaryd (SE)
(74) Representative: Simonsson, Erik

(57) **Abstract**

The invention concerns a lift (1) for a passenger vehicle (2) that has a doorway, through which a plurality of passengers can pass at alighting or entering to or from a ground area (14) straight outside the doorway. The lift (1) is placed on board the vehicle (2) and has a lift platform (4), which in a parking position is vertically raised and in a position of use is horizontally folded down in order to render movement of a lift passenger possible through the doorway between the vehicle (2) and the ground outside of it. In its position of use the lift (1) is adapted in a first position of height and rotation to render possible pick-up and drop off of said lift passenger on board the vehicle (2) and in a second position of height and rotation to render possible pick-up and drop off of said lift passenger on a ground area outside the vehicle (2), said ground area being placed aside of the ground area (14) straight outside the doorway, so that outside the vehicle (2) a general alighting or entering passage is created for other passengers and a separate pick-up or drop off area is created for said lift passenger aside of said passage. According to the invention the lift platform (4) is adapted to be vertically raised rotated about a first vertical axis (V1) from said parking position to a mid position and to be folded down not until outside the vehicle (2) from the mid position about a horizontal axis (H) to said first position of height and rotation in order to render possible pick-up and drop off of said lift passenger.

## Description

### Technical Field

The present invention concerns a lift for a passenger vehicle that has a doorway, through which a plurality of passengers can pass at alighting or entering to or from a ground area straight outside the doorway. The lift is adapted to be placed on board the vehicle inside the doorway and comprises a lift platform, which in a parking position is vertically raised in order to render space saving storing possible on board the vehicle and in a position of use is horizontally folded down in order to render movement of a lift passenger possible through the doorway between the vehicle and the ground outside of it. In its position of use the lift is adapted in a first position of height and rotation to render possible pick-up or drop off of said lift passenger on board the vehicle and in a second position of height and rotation to render possible pick-up or drop off of said lift passenger on a ground area outside the vehicle, said ground area being placed aside of the ground area straight outside the doorway, so that outside the vehicle a general alighting or entering passage is created for other passengers and a separate pick-up and drop off area is created for said lift passenger aside off said passage.

### Prior Art

A lift according to preamble is well-known from US 5 180 275. In this document, the lift is described in connection with a bus, but the expression passenger vehicle used herein is to be interpreted broader than that and to include rail vehicles, like trams and trains, as well. In buses and trams the lift is intended as an aid only for disabled passengers, whereas it in train also can be used for loading and unloading of for instance catering cars.

The lift according to the US-document has the disadvantage that it puts great demands on the vehicle in question. The doorway, through which the platform of the lift has to pass, must be very wide in order to enable the platform horizontally folded down inside the vehicle to rotate about a vertical axis first out of and then back again into the vehicle. Outside the vehicle the lift platform is rotatable further and is adapted to occupy on ground an alighting or entering position that leaves at least a part of the area outside the doorway free for passage for others passengers. On board the vehicle, the known lift in an alighting or entering position entirely blocks both the doorway and a big area inside thereof, which inevitably leads to big disturbances at alighting or entering both for the user of the lift and for the other passengers wishing to pass the doorway.

### Object of the Invention

In the light of this, the purpose of the invention is to improve the known lift according to US 5 180 275 so that use of the lift is facilitated for all parties concerned.

### Short summary of the Invention

According to the invention, this is achieved with the aid of a lift according to preamble, which lift is characterized in that said lift platform is adapted to be vertically raised rotated about a first vertical axis from said parking position to a mid position and to be folded down not until outside the vehicle from the mid position about a horizontal axis to said first position of height and rotation in order to render possible pick-up or drop off of said lift passenger. The biggest advantage with the lift according to the invention compared with the prior art solution is that the situation at alighting or entering is improved appreciably on board the vehicle, because the space that is required on board for driving up of the lift due to the invention becomes considerably smaller. Moreover, it is possible to use this advantage of the lift according to the invention in order to render possible install of a lift also on board vehicles in which there is only a very limited space at disposal.

According to a preferred embodiment runs said horizontal axis runs along an edge of said lift platform to reach a corner, where the lift has a second vertical axis, about which said lift platform is rotatable away from the area straight outside the doorway. The second vertical axis increases the possibility to adapt the lift to existing circumstances and the placement of the horizontal axis along one of the edges of the lift platform facilitates the opening up of said alighting or entering passage.

According to an embodiment designed especially for narrow doorways the lift includes a lying down U-shaped swivel arm, which at its first end has said first vertical axis and at its second end has said second vertical axis, wherein the swivel arm carries a lift mast in a way rotatable about the second vertical axis, said lift mast on its part carrying the lift platform in a height adjustable way. The advantage of the U-shaped swivel arm is that it can be installed in a way which makes it possible to let it sweep tightly around a doorframe and thereby to take up a minimum of space in said doorway, whereas the advantage of the rotatable mast primarily lies in a excellent possibilities of adaptation to existing circumstances, such as different platform heights or different obstacles on a platform.

Preferably the lift mast and the lift platform carried thereby are adapted to when rotating the lift platform vertically raised implement a parallel displacement motion, which is achieved with the aid of a belt means, that comprises a closed belt loop surrounding sprockets in a non-slipping way about vertical axes and following due to a number return rollers the U-shaped contour of the swivel arm. The belt loop and return rollers contribute to maintained small dimensions of the U-shaped swivel arm in particular around said doorframe, and the parallel displacement motion reduces the necessary turning radius on board the vehicle to a minimum.

Preferably the band loop comprises of a two row chain. This exact solution has turned out to provide superior stability and a minimum free travel of the lift platform.

Preferably there are arranged a first linear actuator in order to achieve the rotation movement of the U-shaped swivel arm and a second linear actuator to drive the band loop independently of the first linear actuator in order to achieve rotation of the lift platform about the second vertical axis. Linear actuators have also shown to lead to superior stability and itself mean superior stability and a minimum free travel of the lift platform. Moreover, they are easy to be disconnected at a possible disruption, such as a power failure, or even to be driven manually, for instance by means of a crank.

According to a second embodiment the lift includes a lifting parallelogram, that is turned towards the doorway and has an outer arm end, at which said second vertical axis is located, wherein the arm end rotatably about the second vertical axis carries a swivel head, which on its part carries the lift platform. The lift according to the second embodiment builds on more traditional technology than the one according to the first embodiment with the U-shaped arm, but functionally one achieves the same goals therewith. An important difference is however that on board it is not possible to install the lift according to the second embodiment in a way hidden behind a doorframe. This means that the lift according to the second embodiment preferably is used only for vehicles with broad doorways, such as doorways closed by means of twin doors.

Preferably, in the lift according to the second embodiment a mutual rotation position of the arm end and of the swivel head is lockable with the aid of a cylinder pin, which is insertable in defined angle positions in control orifices in either part, wherein the cylinder pin suitably is operatable with the aid of a pistol-grip, which has a releasable safety latch. It has shown that this very simple solution is easy to understand for a user and that it due to the given fixed positions leads to the necessary stability for lift platform.

### Short Description of the Drawings

Two embodiments of the invention are described closer in the following with reference to the enclosed schematic drawings, on which:
Fig 1-5 in perspective views from the top show a motion scheme of a lift according to a first embodiment;
Fig 6-10 in perspective views from the top show a motion scheme of a lift according to a second embodiment;
Fig 11 in a perspective view shows a detail of the first embodiment; and
Fig 12 in a side view shows a detail of the second embodiment.

### Minute Description of two Embodiments

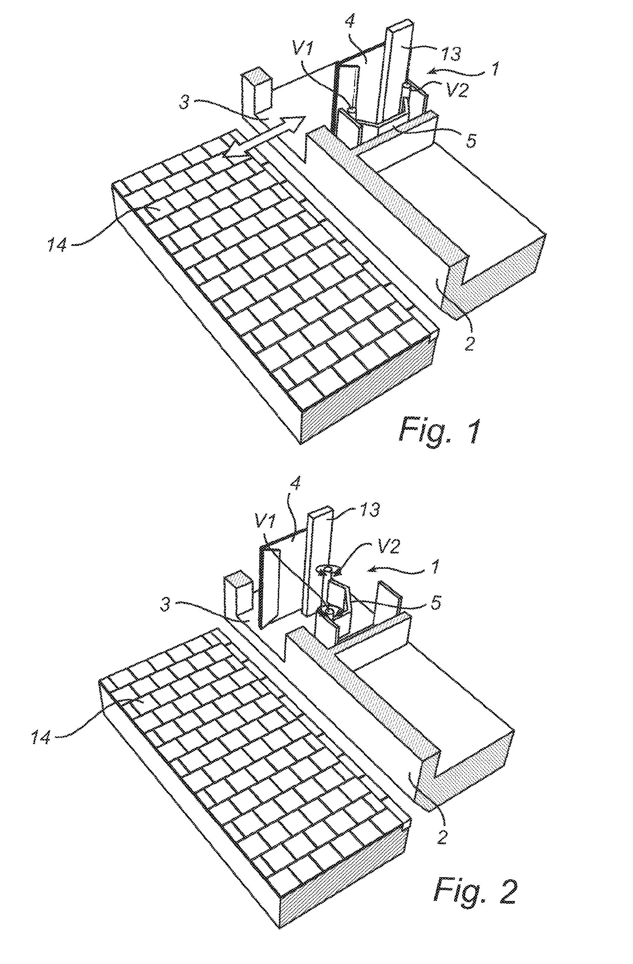

The lift 1 shown in figs. 1-5 and fig. 11 is intended for a passenger vehicle 2, in this case a train car, that has a doorway 3. Through the doorway 3 passengers shall pass quickly at alighting or entering often carrying bulky luggage.

The lift 1 is placed on board the vehicle 2 in the doorway 3 and has a lift platform 4, which in a parking position is vertically raised and rotated away from the doorway 3. In this position it forms no obstacles whatsoever for alighting or entering despite the fact that the doorway 3 shown in this example is a very narrow one.

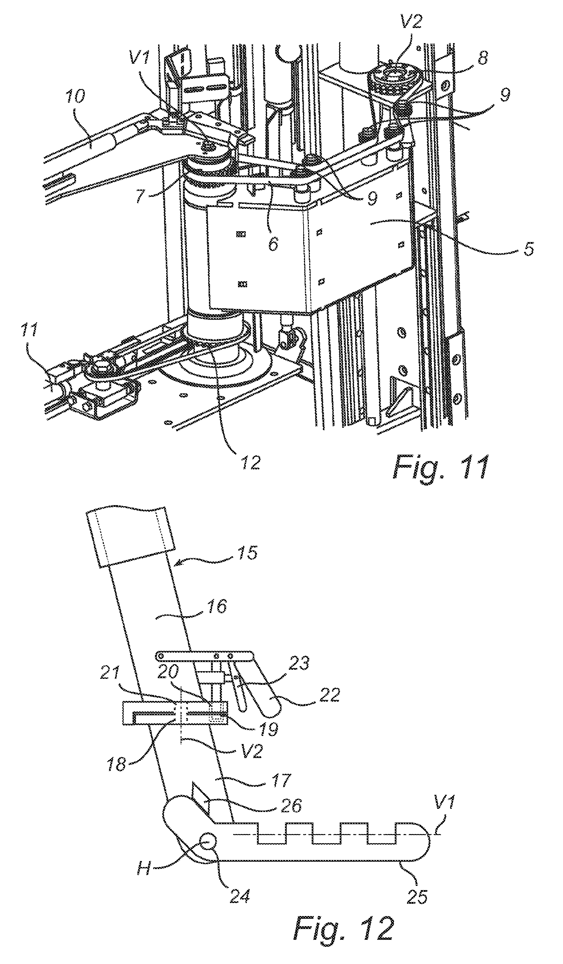

As shown in figs. 1-3, from its parking position the lift platform 4 with the aid of a lying down U-shaped swivel arm 5 can rotate about a first vertical axis V1 and a second vertical axis V2 in a parallel displacement motion from inside of the vehicle 2, through the doorway 3 and to the outside of the vehicle 2. Said parallel displacement motion is achieved the with the aid of a two row chain 6, that is shown only in fig 11.

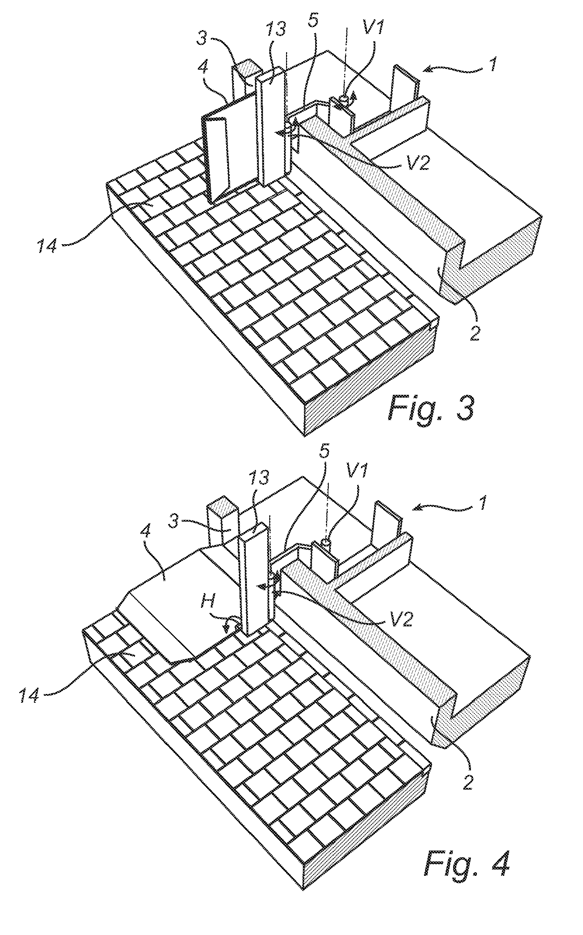

In fig. 11 it is shown that the chain 6 runs over a first sprocket 7 at the first vertical axis V1 and over a second sprocket 8 at the second vertical axis V2 as well as over a number of return rollers 9, which make the chain follow the contour of the U-shaped swivel arm 5. In fig. 11 it is also shown that a first linear actuator 10 is arranged in order to achieve the rotational movement of U-shaped swivel arm 5, said movement leading to the desired the parallel displacement by letting the first sprocket 7 stand still. However, when the first sprocket 7 is rotated with the aid of a second actuator 11 and a third sprocket 12 on the first vertical axis V1, the second sprocket 8 is also rotated and thus the lift platform 4 (c.f. figs. 4-5). The actuators 10, 11 are preferably electric and suitably they are disconnectable or crankable by hand in order keep up an emergency function in case there is a power failure.

The swivel arm 5 carries with the aid of the other vertical axis V2 in a rotatable way a lift mast 13, which on its part with the aid of a horizontal axis H carries the lift platform 4. Due to the horizontal axis H, the lift platform 4 is able to when it is located in the position shown in fig. 3 to be folded down to a horizontal position of use, as illustrated in fig. 4. In this position it is possible to safely embark on and or leave the lift platform 4 through the doorway 3 of the vehicle 2.

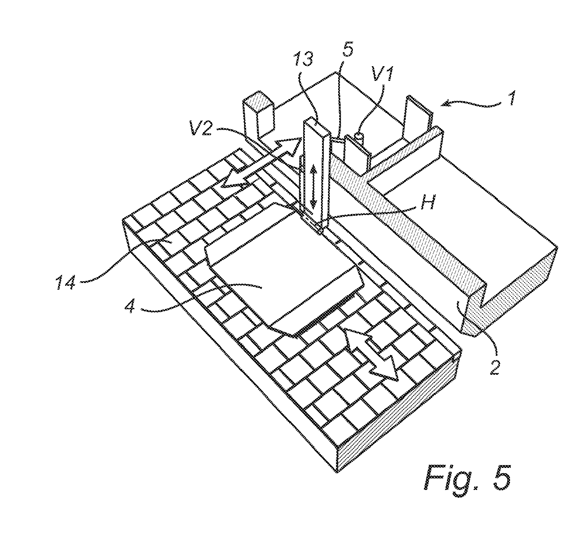

The lift mast 13 is vertical and is height adjustable, so that the lift platform 4 connected thereto can be lifted and lowered as needed. One of the thoughts behind the invention is that the lift platform 4 when being lifted or lowered concurrently is rotated to and from the doorway 3 in order blocked it as little as possible for passengers, who have no need of the lift. Therefore, in an entirely lowered position or ground position the lift platform 4 occupies preferably the position shown in fig. 5, in which the passage into and out of the doorway 3 and the ground area 14 straight outside of the doorway is more or less uninfluenced by the lift 1. For a user of the lift 1 this is advantageous too, since alighting or entering can be performed without any stress through other passengers.

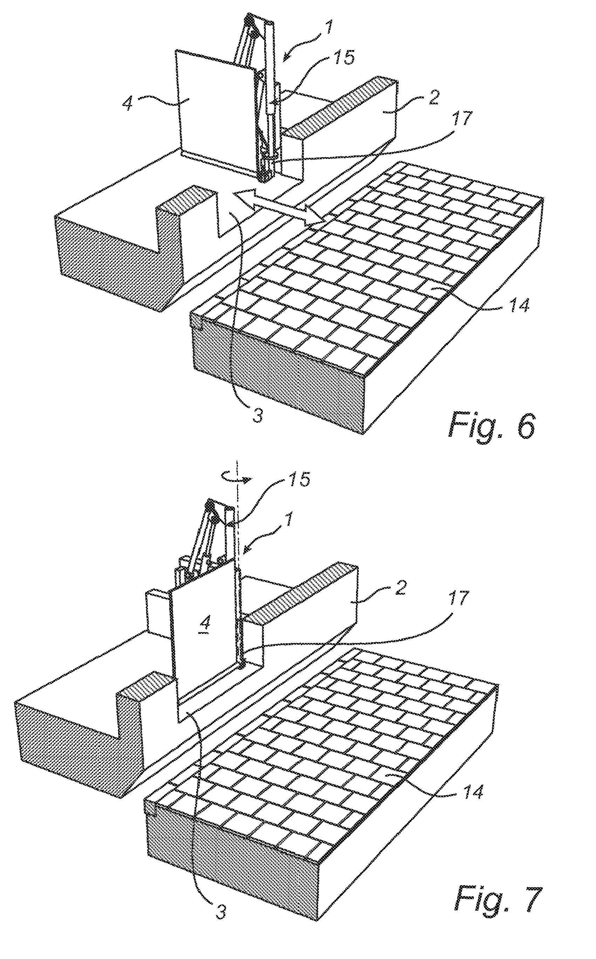

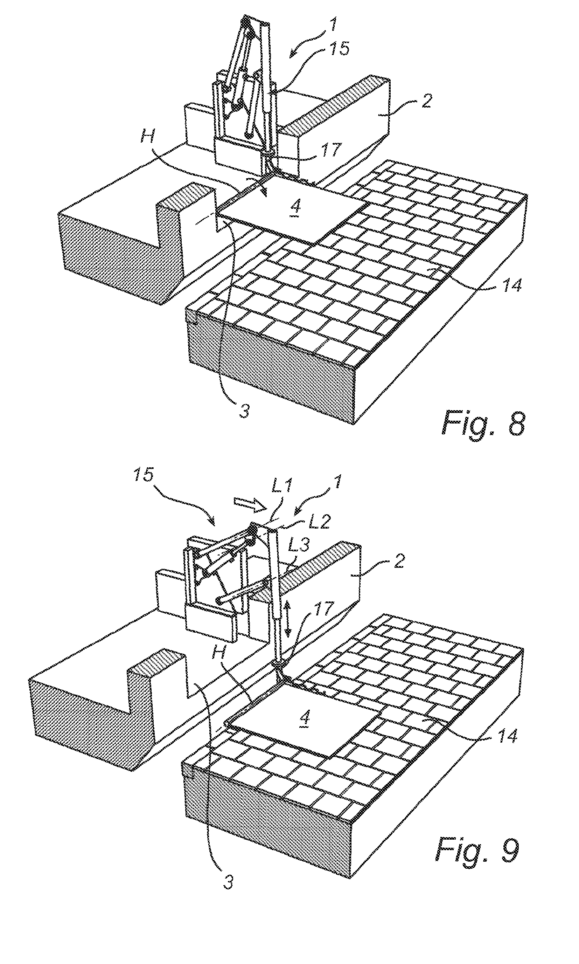

In figs. 6-10 and 12 another embodiment of the lift 1 according to the invention is shown, wherein compared to the first embodiment corresponding reference numbers are used for details corresponding to details of the first embodiment.

The lift 1 according to the second embodiment includes a lifting parallelogram 15, that is well-known in the art and is turned towards the doorway 3. The lifting parallelogram 15 has an outer, especially telescopic arm end 16, of which a detailed view is shown in fig. 12.

In fig 12 a swivel head 17 is shown rotatably mounted on the arm end 16. The two are adjoined by means of a joint 18, that defines the second vertical axis V2 of the lift. The joint 18 is lockable with the aid of a cylinder pin 19, which in defined angle positions is insertable in control orifices 20, 21 in either part. The cylinder pin 19 is operatable with a pistol grip 22, that has a releasable safety latch 23.

On the swivel head 17, apart from the second vertical axis of the lift 1, the first vertical axis V1 and the horizontal axis H are to be found. The horizontal axis H located at the bottom of the swivel head 17 and includes a pivot 24, which on said head 17 rotatably carries an elongated mount 25 for the lift platform 4. As shown the mount 25 is down foldable to a horizontal position, in which it is locked by an abutment projection 26. In a raised position the mount 25 defines the first vertical axis V1 of the lift 1, i.e. the axis about which the lift platform 4 is rotated as described above when rotating from the parking position to the position in or outside of the doorway 3.

The function for the lift 1 according to the second embodiment is evident from the movement scheme in figs. 6-10 and only requires a few further comments thanks the explanations given concerning the first embodiment.

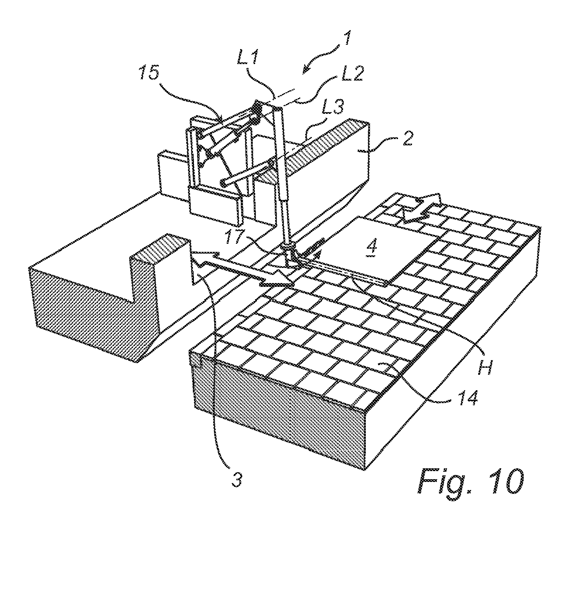

The above lifting parallelogram 15 includes several arms that interact with each other by means of horizontal joints L1, L2, L3, etc., which in a way known ensure that the lift platform 4 in a position of use is kept in balance, i.e. horizontal. At the arm end 16 of the lifting parallelogram 15 the swivel head 17 described above in detail is affixed. This allows it to rotate from the parking position shown in fig. 1 about the first vertical axis V1 to the position shown in fig. 2, in which the lift platform 4 is vertically raised in the middle of the doorway 3. From the position shown in fig. 2 the lift platform 4 is folded down about the horizontal axis H to the position of use shown in fig. 3. Now the lift platform 4 is rotated about the second vertical axis V2 and is lowered with the aid of lifting parallelogram 15 down to the ground outside of the vehicle 2 on a spot, which, as is illustrated in fig. 10, is located aside of the area 14 straight outside of the doorway 3. The lift 1 according to the second embodiment thus also meets all the requirements to be fulfilled according to the invention and does also give the desired advantages compared to prior art.

Finally, it has to be said that the lift 1 according to the first embodiment constitutes an all motorized solution, while the second one constitutes a manual solution except for the lifting parallelogram 15, that is run hydraulically. It is however obvious that it is very well possible to add or take away different motor solutions. Moreover it has to be said that the lift 1 according to the first embodiment with the U-shaped curved swivel arm is intended especially for narrow doorways 3, while the one according to the second embodiment works best in connection with somewhat broader doorways 3, since the lifting parallelogram 15 requires a little more space.

## Claims

1. Lift (1) for a passenger vehicle (2) that has a doorway (3), through which a plurality of passengers can pass at alighting or entering to or from a ground area (14) straight outside the doorway (3), said lift (1) being placed on board the vehicle (2) inside the doorway (3) and having a lift platform (4), which in a parking position is vertically raised in order to render space saving storage possible on board the vehicle (2) and in a position of use is horizontally folded down in order to render movement of a lift passenger possible through the doorway (3) between the vehicle (2) and the ground outside of it, wherein the lift (1) in its position of use is adapted in a first position of height and rotation to render possible pick-up or drop off of said lift passenger on board the vehicle (2) and in a second position of height and rotation to render possible pick-up or drop off of said lift passenger on a ground area outside the vehicle (2), said ground area being placed aside of the ground area (14) straight outside the doorway (3), so that outside the vehicle (2) a general alighting or entering passage is created for other passengers and a separate pick-up or drop off area is created for said lift passenger aside of said passage, **characterised in that** said lift platform (4) is adapted to be vertically raised rotated about a first vertical axis (V1) from said parking position to a mid position and to be folded down not until outside the vehicle (2) from the mid position about a horizontal axis (H) to said first position of height and rotation in order to render possible pick-up or drop off of said lift passenger.

2. Lift (1) according to claim 1, wherein said horizontal axis (H) runs along an edge of said lift platform (4) to reach a corner, where the lift (1) has a second vertical axis (V2), about which said lift platform (4) is rotatable away from the area (14) straight outside the doorway (3).

3. Lift (1) according to claim 2, said lift (1) including a lying down U-shaped swivel arm (5), which at its first end has said first vertical axis (V1) and at its second end has said second vertical axis (V2), wherein the swivel arm (5) carries a lift mast (13) in a way rotatable about the second vertical axis (V2), said lift mast (13) on its part carrying the lift platform (4) in a height adjustable way.

4. Lift (1) according to claim 3, wherein said lift mast (13) and the lift platform (4) carried thereby are adapted to when rotating the lift platform (4) vertically raised implement a parallel displacement motion, which is achieved with the aid of a belt means, that comprises a closed belt loop (6) surrounding sprockets (7, 8) in a non-slipping way about vertical axes (V1, V2) and following due to a number return rollers (9) the U-shaped contour of the swivel arm (5).

5. Lift (1) according to claim 4, wherein the band loop (6) comprises of a two row chain.

6. Lift (1) according to claim 4 or 5, wherein a first linear actuator (10) is arranged in order to achieve the rotation movement of the U-shaped swivel arm (5).

7. Lift (1) according to claim 6, wherein a second linear actuator (11) is arranged to drive the band loop (6) independently of the first linear actuator (10) in order to achieve rotation of the lift platform (4) about the second vertical axis (V2).

8. Lift (1) according to claim 2, said lift (1) including a lifting parallelogram (15), that is turned towards the doorway (3) and has an outer arm end (16), at which said second vertical axis (V2) is located, wherein the arm end (16) rotatably about the second vertical axis (V2) carries a swivel head (17), which on its part carries the lift platform (4).

9. Lift (1) according to claim 8, wherein a mutual rotation position of the arm end (16) and of the swivel head (17) is lockable with the aid of a cylinder pin (19), which is insertable in defined angle positions in control orifices (20, 21) in either part (16, 17).

10. Lift (1) according to claim 9, wherein the cylinder pin (19) is operatable with the aid of a pistol-grip (22), which has a releasable safety latch (23).
